# EUROPÄISCHE PATENTSCHRIFT

(11) **EP 3 173 632 B1**
(45) Veröffentlichungstag und Bekanntmachung des Hinweises auf die Patenterteilung: **22.07.2020**
(21) Anmeldenummer: 16199930.5
(22) Anmeldetag: 22.11.2016
(51) Int. Cl.: F16B 13/00, F16B 13/14

(54) **BETONANKER, BETONANKERSYSTEM, BEFESTIGUNGSANORDNUNG UND VERFAHREN ZUM HERSTELLEN EINER BEFESTIGUNGSANORDNUNG**
CONCRETE ANCHOR, CONCRETE ANCHOR SYSTEM, FASTENING ARRANGEMENT AND A METHOD FOR PRODUCING A FASTENING ARRANGEMENT
ANCRAGE POUR BÉTON, SYSTÈME D'ANCRAGE POUR BÉTON, SYSTÈME DE FIXATION ET PROCÉDÉ DE FABRICATION D'UN SYSTÈME DE FIXATION

(30) Priorität: 30.11.2015 DE 102015120789
(43) Veröffentlichungstag der Anmeldung: 31.05.2017
(73) Patentinhaber: SFS Intec Holding AG, 9435 Heerbrugg (CH)
(72) Erfinder: Korhonen, Tero, 72592 Västerås (SE)

(56) Entgegenhaltungen:
- EP-A2- 1 591 596
- EP-A2- 2 213 888
- EP-A2- 2 466 025
- WO-A2-2004/053341
- DE-A1-102011 054 895
- DE-U1-202008 002 183
- DE-U1-202009 015 787
- GB-A- 191 419 218

## Beschreibung

Die Erfindung betrifft ein Verfahren zum Herstellen einer Befestigungsanordnung mit einem Betonanker.

Die Bauindustrie arbeitet häufig mit vorgefertigten Betonelementen. Diese werden für Gebäudewände, -böden, -decken, -dächer und so weiter verwendet. Insbesondere die Wände sind häufig an der Außenseite des Gebäudes isoliert, um auf diese Weise eine Energieeinsparung zu erzielen. Um die Isolierung an der Außenseite der Betonwände anzubringen, werden üblicherweise Dämmstoffbefestiger in Verbindung mit Betonschrauben verwendet. Man spricht auch von "External Thermal Insulation Composite Systems" (ETICS) oder Wärmedämmverbundsystemen (WDVS).

Um diese Systeme einzusetzen, ist es gemäß dem Stand der Technik erforderlich in die Betonwände Bohrungen einzubringen. Hierfür werden Betonbohrer benötigt, das Vorbohren erfordert Zeit, es ist lärmintensiv, und die bei dem Bohren erzeugten Vibrationen erschweren den am Bau beschäftigten Arbeitern ihre Tätigkeit.

So zeigt die DE 10 2011 054 895 A1 einen Dämmstoffhalter zum Befestigen von Wärmedämmplatten. Er ist so ausgestaltet, dass ein Schaftelement mit einem Dämmstoffgewinde in die Wärmedämmplatten eingedreht werden kann, so dass über die Gewindeflächen eine Kraftübertragung in die Dämmplatten erfolgen kann. Durch den Schaft hindurch wird ein Befestiger geführt, dessen Spitze mittels eines Dübels auf bekannte Art in einem Bohrloch der Unterkonstruktion unter den Wärmedämmplatten verankert wird. Durch Eindrehen des Befestigers in den Dübel wird der Schaft durch den Kopf des Befestigers in Richtung Unterkonstruktion gezogen, was wiederum die Wärmedämmplatten verankert.

Die EP 2 213 888 A2 ist eine Variante des vorgenannten Prinzips. Der Dämmstoffhalter verfügt zusätzlich über eine Schaftsektion mit Rippen, welche beim Eindrehen des Befestigers radial ausknicken können und somit für eine Längsverstellbarkeit des Schafts erlauben. Die Rippen verfügen über Ausknickhilfen (Sollknickstellen), die helfen, definiert die Rippen in den umgebenden Wärmedämmstoff eintauchen zu lassen.

Es ist eine Aufgabe der Erfindung, eine Lösung zur Bereitstellung isolierter Gebäudeelemente aus Beton bereitzustellen, bei der ein Einbringen von Bohrungen in den Beton entbehrlich ist.

Diese Aufgabe wird mit den Merkmalen von Anspruch 1 gelöst. Vorteilhafte Ausführungsformen der Erfindung sind in den abhängigen Ansprüchen angegeben.

Die Erfindung verwendet einen Betonanker mit einem einen Kraftangriff aufweisenden Kopf und einem eine Längsachse definierenden, in einer Spitze endenden Schaft, wobei der Schaft einen Längsanschlag, mindestens einen Außengewindeabschnitt und mindestens einen Verankerungsabschnitt aufweist und wobei der Schaft zumindest teilweise elastisch deformierbar ist, so dass in einem deformierten Zustand eine Erstreckung des Schaftes von der Längsachse abweicht. Ein solcher Betonanker lässt sich folgendermaßen in einem Verfahren zur Herstellung einer Befestigungsanordnung zum Einsatz bringen. Zunächst wird eine Form zum Gießen eines Betonelementes zur Verfügung gestellt. In diese Form werden zunächst eines oder mehrere insbesondere flächige Isolationselemente eingelegt. Werden mehrere Isolationselemente verwendet, so werden diese übereinander stapelartig angeordnet. In die so bereitgestellte Isolierung wird nun der Betonanker eingebracht, nämlich insbesondere in Richtung seiner durch den Schaft definierten Längsachse, die bevorzugt senkrecht auf der durch die vorzugsweise flächige Ausdehnung der Isolation definierten Ebene zu stehen kommt. Die Einbringung wird durch den Außengewindeabschnitt des Betonankers unterstützt, das heißt der Betonanker kann in die Isolierung eingeschraubt werden. Der Einschraubvorgang wird solange fortgesetzt, bis der Längsanschlag des Betonankers an der Isolierung anschlägt. Vorher hat bereits die Spitze des Betonankers die Isolierung vollständig durchdrungen und die Form kontaktiert. Aufgrund der elastischen Deformierbarkeit des Betonankers lässt dieser aber nach Anschlagen der Spitze an der Form ein weiteres Einschrauben des Betonankers zu. Der Betonanker gibt seine exakte Erstreckung entlang seiner Längsachse auf; mit anderen Worten, der Betonanker knickt ab. Im Anschluss an die so erfolgte Platzierung des Betonankers wird Beton in die Form eingegossen. Dies kann in einem oder mehreren Arbeitsgängen erfolgen. Jedenfalls ist nach Aushärten des Betons der Kopf des Betonankers im Beton verankert. Der Verbund aus Beton, Isolierung und Betonanker kann dann aus der Form entnommen werden. In diesem Moment verliert die Spitze des Betonankers ihren Kontakt zur Form, und der Betonanker kann aufgrund einer elastischen Rückstellkraft wieder seine ursprüngliche oder zumindest nahezu seine ursprüngliche längsaxiale Ausrichtung einnehmen. Da der Betonanker dann in die Richtung senkrecht zur Isolierung "länger wird", erscheint seine Spitze sichtbar an der Außenseite der Isolierung. Nun können weitere Befestigungselemente mit dem Betonanker in Verbindung gebracht werden, um eine stabile und nachhaltige Befestigung der Isolierung an dem Beton sicherzustellen. Nützlicher Weise ist vorgesehen, dass der Längsanschlag eine sich radial erstreckende Platte ist. Eine sich radial erstreckende Platte an dem Betonanker stellt einen sicheren Anschlag des Betonankers an der Isolierung zur Verfügung. Die Platte ist gut sichtbar, so dass zusätzlich zur mechanischen Blockierung eines weiteren Eindrehens des Betonankers der richtige Zeitpunkt zum Beenden des Einschraubens optisch durch den Arbeiter überwacht werden kann.

Der Verankerungsabschnitt weist ein Spreizelement auf. Wenn nach dem Entnehmen der Anordnung aus Isolierung, Beton und Betonanker aus der Form weitere Befestigungselemente am Betonanker angebracht werden, so dient dies dazu, dass die genannte Anordnung stabilisiert wird. Dies kann dadurch erfolgen, dass ein Spreizelement innerhalb der Isolierung aktiv wird. Dieses verdrängt die Isolierung in seinem Bereich und gibt kraft- und/oder formschlüssigen Halt des Betonankers in der Isolierung.

Es ist von Vorteil, dass der Schaft zwei Außengewindeanschnitte aufweist. Beispielsweise kann einer der beiden Außengewindeabschnitte bezüglich des Spreizelementes kopfseitig angeordnet sein, während der andere Außengewindeabschnitt bezüglich des Spreizelementes spitzenseitig vorgesehen ist. Durch das Bereitstellen von zwei Außengewindeabschnitten ist insgesamt mehr Gewinde am Betonanker untergebracht, was sich beim Einschrauben des Betonankers nützlich erweist. Bei der Verwendung von mehreren Isolationselementen können die verschiedenen Außengewindeabschnitte mit unterschiedlichen Isolationselementen zusammenwirken. Somit findet jedes Isolationselement Halt am Betonanker, was bei der Entnahme der Anordnung aus Isolation, Beton und Betonanker aus der Form sowie vor Fertigstellung des gesamten Betonankersystems beziehungsweise der gesamten Befestigungsanordnung wesentlich ist.

Es ist vorteilhaft, wenn ein Außengewindeabschnitt im Bereich der Spitze angeordnet ist. Beim Einschrauben des Betonankers in die Isolierung wird somit vom ersten Moment an ein Gewinde zur Verfügung gestellt, was das Einschrauben erleichtert. Weiterhin ist das Spitzengewinde hilfreich, wenn der Betonanker an der Form anschlägt und es um das Abknicken des Betonankers geht. Das Gewinde stellt der Spitze eine Asymmetrie zur Verfügung, das heißt ein Abweichen von der Zylindersymmetrie. Bei strenger Zylindersymmetrie wäre eine sogenannte spontane Symmetriebrechung erforderlich, damit der Betonanker überhaupt von seiner längsaxialen Ausrichtung abweichen kann, denn bei strenger Zylindersymmetrie sind alle Abknickrichtungen gleichberechtigt. Im schlechtesten Fall käme es zu keiner Symmetriebrechung, wodurch das Gewinde den formschlüssigen Kontakt in der Isolierung verlöre. Durch das Spitzengewinde und somit die asymmetrische Form des Gewindes ist jedoch eine Vorzugsrichtung gegeben. Der Betonanker knickt also ohne großen Kraftaufwand ab und lässt sich leicht bis zum Auftreffen des Längsanschlags in die Isolierung eindrehen.

Es ist von besonderem Vorteil, dass der Schaft ausgehend von der Spitze und zumindest über den Verankerungsabschnitt hinaus einen Hohlabschnitt aufweist. Der Hohlabschnitt dient der Aufnahme eines weiteren Befestigungselementes, das nach Entnahme der Anordnung aus Isolierung, Beton und Betonanker in den Betonanker eingebracht wird.

Dabei kann es von Vorteil sein, dass der Hohlabschnitt zumindest teilweise ein Innengewinde aufweist. Soll ein schraubenartiges Befestigungselement in den Betonanker eingedreht werden, so kann ein Innengewinde, das in dem Betonanker vorgesehen ist, hilfreich sein. Dieses Innengewinde ist jedoch nicht zwingend erforderlich. Vielmehr kann sich die in dem Betonanker einzubringende Befestigungsschraube auch selber ihr Gewinde im Betonanker schneiden. Jedenfalls wird durch die Zugwirkung des Gewindes der Spreizabschnitt gespreizt, so dass ein sicherer Halt des Betonankers in der Isolierung hergestellt wird.

Auf der Grundlage der vorstehenden Ausführung bezieht sich das erfinderische Verfahren weiterhin auf ein Betonankersystem mit einem Betonanker und ein Befestigungselement, das über die Spitze des Betonankers in den Hohlabschnitt des Schaftes einführbar ist.

Dieses Betonankersystem ist nützlich dadurch weitergebildet, dass das Befestigungselement in den Hohlabschnitt des Schaftes einschraubbar ist.

Weiterhin und in Ergänzung des bisher gesagten kann vorgesehen sein, dass ein Tellerelement zwischen dem Betonanker und dem Befestigungselement platzierbar ist, wobei sich eine Tellerplatte des Tellerelementes radial erstreckt. Das Tellerelement hat aufgrund seiner radialen Erstreckung eine große Anlagefläche an der Außenseite der Isolierung, so dass hier ohne großen punktuellen Druck eine vergleichsweise große Kraft aufgenommen werden kann. Das Tellerelement liefert daher zusätzlich zum Spreizelement innerhalb der Isolierung eine Stabilisierung der Isolierung an dem Betonanker und somit an dem Beton.

Dabei kann es von Vorteil sein, dass das Tellerelement einen Axialfortsatz aufweist, mit dem die Spitze des Betonankers kontaktierbar ist. Der Axialfortsatz des Tellerelementes dringt beim Einschrauben des Befestigungselementes in den Betonanker in die Isolierung ein und treibt die Spitze des Betonankers in Richtung seines Kopfes. Durch die Länge des Axialfortsatzes kann bestimmt werden, wie stark das Spreizelement beim Einschrauben des Befestigungselementes in Spreizung geht. Ferner ist zu betonen, dass sich das Tellerelement beim Einschrauben des Befestigungselementes in den Betonanker nicht notwendig mitdrehen muss. Es kann also bereits bei großer Kraftaufnahme an der Isolierung weitergedreht werden, ohne dass Isolierung und von außen angebrachte Komponenten aneinander reiben.

Eine Befestigungsanordnung gemäss vorliegender Beschreibung bezieht sich weiterhin auf ein oder mehrere Betonelemente, ein oder mehrere Isolationselemente und mindestens ein vorbeschriebenes Betonankersystem, wobei der Kopf in dem einen oder den mehreren Betonelementen verankert ist und wobei der Verankerungsabschnitt in dem einen oder den mehreren Isolationselementen liegt.

Bei dieser Befestigungsanordnung ist, wie erläutert, nützlich, dass das Befestigungselement das Tellerelement gegen die Spitze des Betonankers treibt, so dass der Betonanker gestaucht und damit das Spreizelement in dem einen oder den mehreren Isolationselementen gespreizt wird.

Um die vorteilhafte Sichtbarkeit des Betonankers bei entnommener Anordnung aus Isolierung, Beton und Betonanker aus der Form sicher zu stellen, ist vorgesehen, dass die Länge des Betonankers zwischen dem Längsanschlag und der Spitze größer ist als die Dicke des einen oder der mehreren Isolationselemente.

Die Erfindung besteht im Kern aus einem Verfahren zum Herstellen einer Befestigungsanordnung, mit den Schritten
- Bereitstellen einer Form,
- Einlegen eines oder mehrerer Isolationselemente in die Form,
- Einschrauben mindestens eines Betonankers in das eine oder die mehreren Isolationselemente bis der Längsanschlag ein Isolationselement kontaktiert, wobei der Betonanker eine elastisch Deformation erfährt,
- Gießen eines oder mehrerer Betonelemente über die eine oder die mehreren Isolationsschichten, wobei der Kopf in dem einen oder den mehreren Betonelementen verankert wird,
- Entnehmen der Anordnung aus dem einen oder den mehreren Isolationselementen, dem einen oder den mehreren Betonelementen und dem mindestens einen Betonanker aus der Form, wobei die elastische Deformation zumindest teilweise aufgehoben wird, und
- Einschrauben des Befestigungselementes in den Betonanker, so dass der Betonanker gestaucht und damit das Spreizelement in dem einen oder den mehreren Isolationselementen gespreizt wird.

Das Verfahren ist dadurch nützlich weitergebildet, dass das Einschrauben des Befestigungselementes unter Beteiligung des Tellerelementes erfolgt und das Befestigungselement das Tellerelement gegen die Spitze des Betonankers treibt.

Die Erfindung wird nun mit Bezug auf die begleitenden Zeichnungen anhand besonders bevorzugter Ausführungsformen beispielhaft erläutert.
- Figur 1: zeigt eine Schnittansicht durch eine erfindungsgemäß hergestellte Befestigungsanordnung mit einem Betonanker beziehungsweise einem Betonankersystem;
- Figur 2: zeigt eine teilweise geschnittene Seitenansicht eines Betonankers;
- Figur 3: zeigt eine teilweise geschnittene Seitenansicht eines Betonankersystems;
- Figur 4: zeigt eine Anordnung mit einer Isolierung, mit Beton und mit zwei Betonankern, wobei die Betonanker unterschiedliche Einschraubtiefen in die Isolierung haben;
- Figur 5: zeigt die Komponenten einer Befestigungsanordnung in einem Zustand vor Fertigstellung der Befestigungsanordnung.

Bei der nachfolgenden Beschreibung der Zeichnungen bezeichnen gleiche Bezugszeichen gleiche oder vergleichbare Komponenten.

Bei dem beschriebenen Ausführungsbeispiel wird stets davon ausgegangen, dass die Isolierung aus zwei Isolationsschichten 41, 42 besteht. Ebenfalls ist es möglich, mehr als zwei Isolationsschichten vorzusehen, oder mit nur einer Isolationsschicht auszukommen. Es ist stets ein einziges Betonelement 40 vorgesehen. Dieses kann beim Herstellungsvorgang durch mehrere, beispielsweise zwei, Gießvorgänge gefertigt sein. Ebenfalls ist es möglich, mehrere Betonelemente vorzusehen, die mit größtem zeitlichen Abstand gegossen werden.

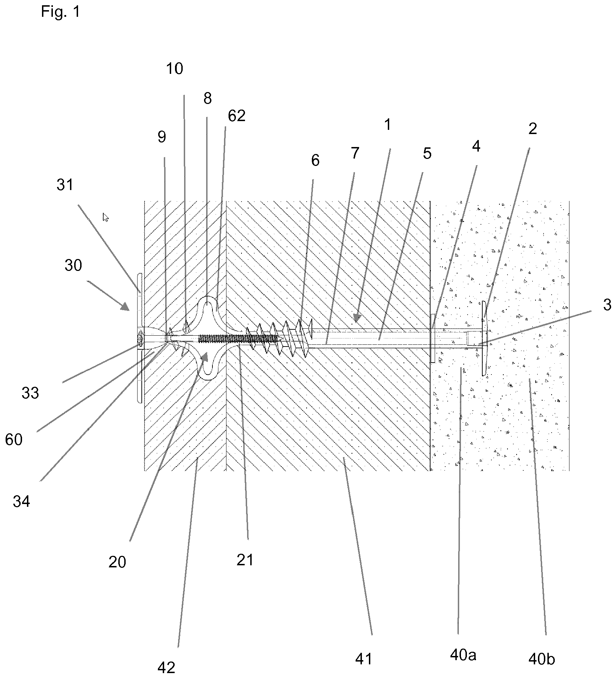

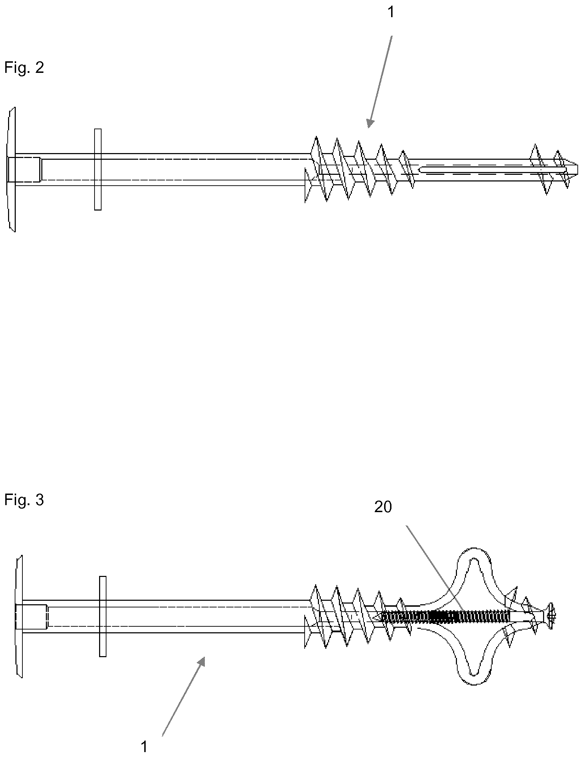

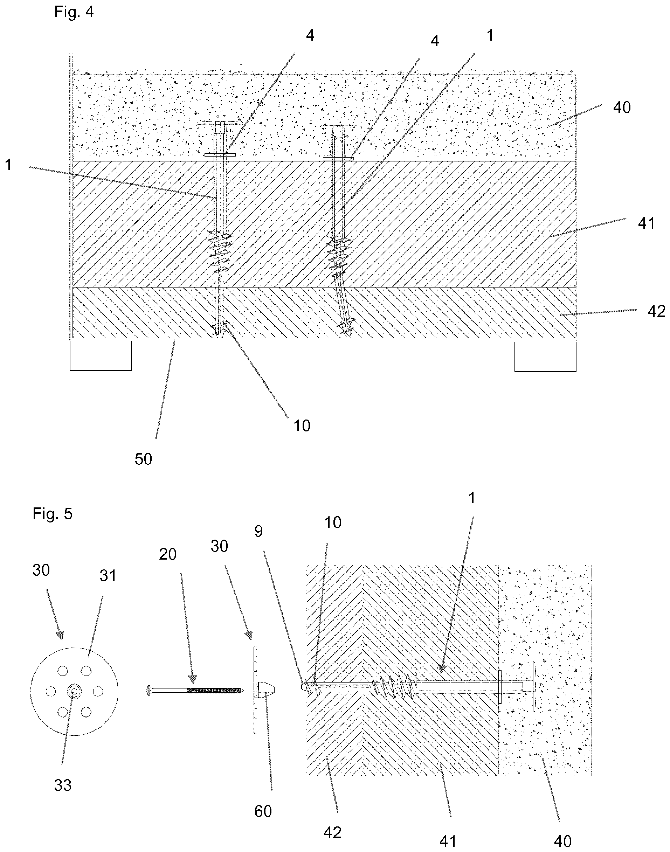

Wie in Figur 4 gezeigt ist, liegen in einer Form 50 zwei Isolationselemente 41, 42, die auch als Basisisolationselement 41 und als Außenisolationselement 42 bezeichnet werden können. Auf den Isolationselementen 41, 42 liegt ein Betonelement 40, welches beispielsweise, wie in Figur 1 gezeigt, aus einer unteren Betonschicht 40a und einer oberen Betonschicht 40b bestehen kann. Die beiden Betonanker 1, die ebenfalls in Figur 4 gezeigt sind, haben unterschiedliche Einschraubtiefen in die Isolationselemente 41, 42. Dabei ist zu beachten, dass es den Zustand des linken Betonankers 1 während des erfindungsgemäßen Herstellungsverfahrens eigentlich nicht gibt. Diesen Zustand nimmt der Betonanker nämlich ein, wenn noch kein Beton, als Bestandteil der Befestigungsanordnung eingegossen ist. Erst nachdem der Zustand des rechts dargestellten Betonankers 1 erreicht ist, wird Beton in die Form 50 gegossen. Gleichwohl wird an der Darstellung gemäß Figur 4 deutlich, welche Funktion der Betonanker 1 im Zusammenhang mit der Befestigungsanordnung erfüllt. In dem Moment, wenn der Betonanker 1, wie in der linken Darstellung, an der Form 50 anschlägt, ist dieser noch vollständig entlang der vom Schaft 5 definierten Längsachse ausgerichtet. Der Längsanschlag des Betonankers 1 befindet sich in diesem Zustand noch nicht in Kontakt mit dem Isolationselement 41. Wird der Betonanker 1 nun weiter in die Isolationselemente 41, 42 eingeschraubt so knickt dieser ab. Das Gewinde 10 an der Spitze 9 des Betonankers hilft aufgrund seiner Asymmetrie, dass der Betonanker 1 in eine der möglichen Richtungen abknickt. Ist der in Figur 4 im Zusammenhang mit dem rechten Betonanker 1 gezeigte Zustand erreicht, wird das Betonelement 40 gegossen. Nach Aushärten des Betonelementes 40, kann die gesamte Anordnung aus der Form 50 entnommen werden. Aufgrund der elastischen Eigenschaften des Betonankers 1 richtet sich dieser nun wieder entlang seiner Längsachse aus, zumindest nahezu. Folglich ragt die Spitze 9 des Betonankers 1 aus dem Außenisolationselement 42 heraus. Die Spitze 9 ist insofern, wie in Figur 5 dargestellt, von außen sichtbar. Dem Arbeiter ist es nun möglich, mittels eines Befestigungselementes 20 und eines Tellerelementes 30 die gesamte Befestigungsanordnung fertigzustellen, so dass der in Figur 1 gezeigte Zustand erreicht wird. Das Befestigungselement 20 wird zu diesem Zweck durch das Tellerelement 30, welches einen Axialfortsatz 60 aufweist, hindurchgeführt und sodann in einen Hohlabschnitt 7 des Betonankers 1 eingeführt. Der Hohlabschnitt 7 kann dabei nahe der Spitze des Betonankers einen solchen Durchmesser haben, so dass das Befestigungselement 20 zunächst in den Betonanker 1 ohne Schraubbewegung eingesteckt werden kann. Der Hohlabschnitt 7 setzt sich über den Verankerungsabschnitt 8 hinaus fort. Hier ist ein Einschrauben des Befestigungselementes 20 erforderlich, sei es in ein vorbereitetes Innengewinde des Betonankers 1 oder durch Einschneiden eines Gewindes in den Betonanker mittels des Befestigungselementes 20. Da der Axialfortsatz 60 des Tellerelementes 30 in diesem Zustand bereits die Spitze 9 des Betonankers 1 kontaktiert, wird diese in das Isolationselement 42 hineingetrieben. Folglich weicht der Betonanker 1 in radiale Richtung unter Spreizung des Spreizelementes 62 am Verankerungsabschnitt 8 aus. Im Endzustand der Befestigungsanordnung, wie er in Figur 1 dargestellt ist, bieten sowohl das Spreizelement 62 als auch das anliegende Tellerelement 30 Halt für die gesamte Befestigungsanordnung. In Figur 3 ist nochmals der Betonanker mit eingebrachten Befestigungselement 20 gezeigt. Hier wurde auf das Tellerelement verzichtet, denn im Prinzip lässt sich die Spreizfunktion auch ohne Tellerelement realisieren.

Insofern wird insgesamt die in Figur 1 dargestellte Befestigungsanordnung zur Verfügung gestellt. Diese umfasst ein Basisisolationselement 41, ein Außenisolationselement 42, ein Betonelement 40, bestehend aus einer unteren Betonschicht 40a, das heißt einer Betonschicht, die an dem Basisisolationselement 41 anliegt, und einer oberen Betonschicht 40b, die auf die untere Betonschicht 40a folgt. Es ist ferner ein Betonanker 1 vorgesehen, der einen Kopf 2 aufweist. Dieser Kopf 2 hat einen Kraftangriff 3, der beispielsweise durch einen Innensechskant oder einen Torxangriff realisiert ist. Ausgehend von dem Kopf 2 hat der Betonanker 1 einen Schaft 5 mit einem Längsanschlag 4. Ein Teil des Schaftes 5 ist mit einem Gewinde 6 ausgestattet, das beispielsweise mindestens den doppelten Außendurchmesser haben kann, wie der Schaft 5 selber. Der Betonanker 1 weist ferner einen Hohlabschnitt 7 auf, der sich von seiner Spitze 9 bis zumindest über den Verankerungsabschnitt 8 hinaus erstreckt. In diesen Hohlabschnitt 7 ist ein Befestigungselement 20 eingeschraubt, welches durch die Zugkraft eines Gewindes 21 des Befestigungselementes 20 eine Axialkraft auf den Betonanker 1 ausübt, so dass der Verankerungsabschnitt 8 seine Funktion als Spreizelement 62 ausübt. Die Axialkraft wird durch gegenseitigen Anschlag eines Schaftanschlages 34 am Betonanker 1 sowie eines Axialfortsatzes 60 am Tellerelement 30 realisiert. Das Tellerelement 30 umfasst eine Tellerplatte 31, einen Tellerschaft 32 sowie mindestens eine Tellerbohrung 33.

### Bezugszeichenliste

- 1: Betonanker
- 2: Kopf
- 3: Kraftangriff
- 4: Längsanschlag
- 5: Schaft
- 6: Gewinde
- 7: Hohlabschnitt
- 8: Verankerungsabschnitt
- 9: Spitze
- 10: Gewinde
- 20: Befestigungselement
- 21: Gewinde
- 30: Tellerelement
- 31: Tellerplatte
- 32: Tellerschaft
- 33: Tellerbohrung
- 34: Schaftanschlag
- 40: Betonelement
- 40a: untere Betonschicht
- 40b: obere Betonschicht
- 41: Basisisolationselement
- 42: Aussenisolationselement
- 50: Form
- 60: Axialfortsatz
- 62: Spreizelement

## Patentansprüche

1. Verfahren zum Herstellen einer Befestigungsanordnung aus einem oder mehreren Betonelementen (40), einem oder mehreren Isolationselementen (41, 42) und mindestens einem Betonankersystem, welches wiederum einen Betonanker (1) und ein Befestigungselement (20) umfasst; wobei der Betonanker (1) wiederum einen Kopf (2) mit Kraftangriff (3) aufweist und einen Schaft (5), der eine Längsachse definiert und in einer Spitze (9) endet, wobei der Schaft (5) einen Längsanschlag (4), mindestens einen Außengewindeabschnitt (6, 10) und mindestens einen Verankerungsabschnitt (8) mit einem Spreizelement (62) aufweist und wobei der Schaft (5) zumindest teilweise elastisch deformierbar ist; und die Länge des Betonankers (1) zwischen dem Längsanschlag (4) und der Spitze (9) grösser ist als die Dicke des einen oder der mehreren Isolationselemente (41, 42);
mit folgenden Verfahrensschritten:
- Bereitstellen einer Form (50),
- Einlegen eines oder mehrerer Isolationselemente (41, 42) in die Form,
- Einschrauben mindestens eines Betonankers (1) in das eine oder die mehreren Isolationselemente (41, 42) bis der Längsanschlag (4) ein Isolationselement (41) kontaktiert, wobei der Betonanker (1) nach Anschlagen der Spitze (9) an der Form (50) eine elastische Deformation erfährt und abknickt,
- Gießen eines oder mehrerer Betonelemente (40) über die eine oder die mehreren Isolationsschichten (41, 42), wobei der Kopf (2) in dem einen oder den mehreren Betonelementen (40) verankert wird und wobei der Verankerungsabschnitt (8) in dem einen oder den mehreren Isolationselementen (41, 42) liegt;
- Entnehmen der Anordnung aus dem einen oder den mehreren Isolationselementen (41, 42), dem einen oder den mehreren Betonelementen (40) und dem mindestens einen Betonanker (1) aus der Form, wobei die elastische Deformation zumindest teilweise aufgehoben wird, und
- Einschrauben des Befestigungselementes (20) über die Spitze (9) des Betonankers (1) in den Hohlabschnitt (7) des Schaftes (5) in den Betonanker (1), so dass der Betonanker (1) gestaucht und damit das Spreizelement (62) in dem einen oder den mehreren Isolationselementen (41, 42) gespreizt wird.

2. Verfahren nach Anspruch 1, **dadurch gekennzeichnet, dass** das Einschrauben des Befestigungselementes (20) unter Beteiligung eines Tellerelementes (30) erfolgt und das Befestigungselement (20) das Tellerelement (30) gegen die Spitze (9) des Betonankers (1) treibt.

3. Verfahren nach Anspruch 1-2, , **dadurch gekennzeichnet, dass** der Längsanschlag (4) des Betonankers (1) eine sich radial erstreckende Platte ist.

4. Verfahren nach einem der vorhergehenden Ansprüche, **dadurch gekennzeichnet, dass** der Schaft (5) des Betonankers (1) zwei Außengewindeanschnitte (6, 10) aufweist.

5. Verfahren nach einem der vorhergehenden Ansprüche, **dadurch gekennzeichnet, dass** ein Außengewindeabschnitt (10) an der Spitze (9) angeordnet ist.

6. Verfahren nach einem der vorhergehenden Ansprüche, **dadurch gekennzeichnet, dass** der Schaft (5) des Betonankers (1) ausgehend von der Spitze (9) und zumindest über den Verankerungsabschnitt (8) hinaus einen Hohlabschnitt (7) aufweist.

7. Verfahren nach Anspruch 6, **dadurch gekennzeichnet, dass** der Hohlabschnitt (7) des Betonankers (1) zumindest teilweise ein Innengewinde aufweist.

## Claims

1. A method for producing a fastening arrangement made of one or more concrete elements (40), one or more insulation elements (41, 42) and at least one concrete anchor system which in turn comprises a concrete anchor (1) and a fastening element (20); wherein the concrete anchor (1) in turn comprises a head (2) with a force application portion (3) and a shank (5) defining a longitudinal axis and ending in a tip (9), wherein the shank (5) comprises a longitudinal stop (4), at least one external thread portion (6, 10) and at least one anchoring portion (8) with an expanding element (62), and wherein the shank (5) is at least partially elastically deformable; and the length of the concrete anchor (1) between the longitudinal stop (4) and the tip (9) is greater than the thickness of the one or more insulation elements (41, 42);
comprising the following method steps:
- providing a mold (50),
- inserting one or more insulation elements (41, 42) into the mold,
- screwing at least one concrete anchor (1) into the one or more insulation elements (41, 42) until the longitudinal stop (4) contacts an insulation element (41), wherein the concrete anchor (1) is subjected to elastic deformation after the tip (9) abuts against the mold (50) and buckles,
- casting one or more concrete elements (40) over the one or more insulation layers (41, 42), wherein the head (2) is anchored in the one or more concrete elements (40) and wherein the anchoring portion (8) lies in the one or more insulation elements (41, 42);
- removing the arrangement made of the one or more insulation elements (41, 42), the one or more concrete elements (40) and the at least one concrete anchor (1) from the mold, wherein the elastic deformation is at least partially eliminated, and
- screwing the fastening element (20) through the tip (9) of the concrete anchor (1) into the hollow portion (7) of the shank (5) into the concrete anchor (1), so that the concrete anchor (1) is compressed and thus the expansion element (62) is expanded in the one or more insulation elements (41, 42).

2. The method according to claim 1, **characterized in that** screwing in the fastening element (20) is carried out with the involvement of a plate element (30) and the fastening element (20) drives the plate element (30) against the tip (9) of the concrete anchor (1).

3. The method according to claim 1-2, **characterized in that** the longitudinal stop (4) of the concrete anchor (1) is a radially extending plate.

4. The method according to any one of the preceding claims, **characterized in that** the shank (5) of the concrete anchor (1) has two external thread portions (6, 10) .

5. The method according to any one of the preceding claims, **characterized in that** an external thread portion (10) is arranged at the tip (9).

6. The method according to any one of the preceding claims, **characterized in that** the shank (5) of the concrete anchor (1) has a hollow portion (7) starting from the tip (9) and at least beyond the anchoring portion (8).

7. The method according to claim 6, **characterized in that** the hollow portion (7) of the concrete anchor (1) at least partially has an internal thread.

## Revendications

1. Procédé de fabrication d'un système de fixation composé d'un ou de plusieurs éléments en béton (40), d'un ou de plusieurs éléments d'isolation (41, 42) et au moins d'un système d'ancrage pour béton, lequel comprend à son tour une tige d'ancrage pour béton (1) et un élément de fixation (20), sachant que la tige d'ancrage pour béton (1) comporte à son tour une tête (2) avec application de force (3) et une queue (5), qui définit un axe longitudinal et se termine dans une pointe (9), sachant que la queue (5) comporte une butée longitudinale (4), au moins une section filetée extérieure (6, 10) et au moins une section d'ancrage (8) avec un élément d'expansion (62) et sachant que la queue (5) peut être au moins en partie élastiquement déformée et la longueur de la tige d'ancrage pour béton (1) est plus grande entre la butée longitudinale (4) et la pointe (9) que l'épaisseur d'un ou de plusieurs éléments d'isolation (41, 42),
avec les étapes de procédé suivantes :
- préparation d'un moule (50),
- insertion d'un ou de plusieurs éléments d'isolation (41, 42) dans le moule,
- vissage d'au moins une tige d'ancrage pour béton (1) dans un ou plusieurs éléments d'isolation (41, 42) jusqu'à ce que la butée longitudinale (4) entre en contact avec un élément d'isolation (41), sachant que la tige d'ancrage pour béton (1) subisse une déformation élastique et plie après butée de la pointe (9) sur le moule (50),
- coulée d'un ou de plusieurs éléments en béton (40) sur une ou plusieurs couches d'isolation (41, 42), sachant que la tête (2) est ancrée dans un ou plusieurs éléments en béton (40) et sachant que la section d'ancrage (8) se situe dans un ou plusieurs éléments d'isolation (41, 42),
- enlèvement du système d'un ou de plusieurs éléments d'isolation (41, 42), d'un ou de plusieurs éléments en béton (40) et d'au moins une tige d'ancrage pour béton (1) du moule, sachant que la déformation élastique est supprimée au moins en partie et
- vissage de l'élément de fixation (20) sur la pointe (9) de la tige d'ancrage pour béton (1) dans la section creuse (7) de la queue (5) dans la tige d'ancrage pour béton (1) de telle manière que la tige d'ancrage pour béton (1) est refoulée et l'élément d'expansion (62) est expansé dans un ou plusieurs éléments d'isolation (41, 42).

2. Procédé selon la revendication 1, **caractérisé en ce que** le vissage de l'élément de fixation (20) a lieu avec la participation d'un élément en plaque (30) et l'élément de fixation (20) entraîne l'élément en plaque (30) contre la pointe (9) de la tige d'ancrage pour béton (1) .

3. Procédé selon la revendication 1-2, **caractérisé en ce que** la butée longitudinale (4) de la tige d'ancrage pour béton (1) est une plaque s'étendant radialement.

4. Procédé selon l'une quelconque des revendications précédentes, **caractérisé en ce que** la queue (5) de la tige d'ancrage pour béton (1) comporte deux sections filetées extérieures (6, 10).

5. Procédé selon l'une quelconque des revendications précédentes, **caractérisé en ce qu'**une section filetée extérieure (10) est disposée sur la pointe (9).

6. Procédé selon l'une quelconque des revendications précédentes, **caractérisé en ce que** la queue (5) de la tige d'ancrage pour béton (1) comporte une section creuse (7) partant de la pointe (9) et allant au moins au-delà de la section d'ancrage (8).

7. Procédé selon la revendication 6, **caractérisé en ce que** la section creuse (7) de la tige d'ancrage pour béton (1) comporte au moins en partie un filetage intérieur.
